# EUROPÄISCHE PATENTANMELDUNG

(11) **EP 4 586 097 A1**
(43) Veröffentlichungstag der Anmeldung: **16.07.2025**
(21) Anmeldenummer: 24151118.7
(22) Anmeldetag: 10.01.2024
(51) Int. Cl.: G06F 11/34

(54) **VERFAHREN ZUR ÜBERPRÜFUNG DES RESSOURCENVERBRAUCHS IN EINEM STEUERUNGSSYSTEM FÜR SCHIENENGEBUNDENEN VERKEHR**

(71) Anmelder: Siemens Mobility AG, 8304 Wallisellen (CH)
(72) Erfinder: Giger, Matthias, 8008 Zuerich (CH)
(74) Vertreter: Siemens Patent Attorneys

(57) **Zusammenfassung**

Die vorliegende Erfindung offenbart ein Verfahren zur Überprüfung eines Resourcenverbrauchs in einem Steuerungssystem für schienengebundenen Verkehr, umfassend die folgenden Verfahrensschritte:
a) Messen eines aktuellen Wertes für den Ressourcenverbrauch innerhalb eines Zeitfensters;
b) Vergleichen des Ressourcenverbrauchs mit einem ersten definierten Grenzwert;
c1) bei einer im Rahmen des Vergleichs festgestellten Unterschreitung des ersten definierten Grenzwerts bleibt der erste definierte Grenzwert mindestens bis zur nächsten Messung fortbestehen; oder
c2) bei einer im Rahmen des Vergleichs festgestellten Überschreitung des ersten definierten Grenzwerts wird mindestens eine weitere separate Messung innerhalb desselben Zeitfensters vorgenommen;
d) Vergleichen dieses weiteren Messwertsmit dem ersten festgelegten Grenzwert;
d1) bei einer im Rahmen des Vergleichs festgestellten Unterschreitung des ersten definierten Grenzwerts durch den weiteren Messwert bleibt der erste definierte Grenzwert mindestens bis zur nächsten Messung fortbestehen;
d2) bei einer im Rahmen des Vergleichs festgestellten Überschreitung des ersten definierten Grenzwerts durch mindestens einen weiteren Messwert wird für dieses hinsichtlich der Länge fixe, aber rollierende Zeitfenster ein erhöhter Ressourcenverbrauch gemeldet.

Auf diese Weise ist es möglich eine Aussage über den Ressourcenverbrauch treffen zu können, die nicht durch einen zu einem ungünstigen Zeitpunkt in dem Zeitfenster gemessenen erhöhten Ressourcenverbrauch dominiert wird. Erst wenn bei einer festgestellten Überschreitung jeder in demselben Zeitfenster gemessene Ressourcenverbrauch über dem ersten definierten Grenzwert liegt, kommt es zur Meldung eines erhöhten Ressourcenverbrauchs. So können Spitzenlasten, die durchaus sporadisch auftreten können und in der Regel nicht weiter bedenklich sind, für die Feststellung, ob tatsächlich ein erhöhter Ressourcenverbrauch vorliegt, verlässlich ausgeblendet bzw. weniger stark gewichtet werden.

## Beschreibung

Die vorliegende Erfindung bezieht sich auf ein Verfahren zur Überprüfung eines Resourcenverbrauchs in einem Steuerungssystem für schienengebundenen Verkehr.

Im schienengebundenen Verkehr befahren die Züge das Eisenbahnnetz entlang von Fahrstrassen, die von einem Leitsystem auf der Ebene der dispositiven Zugsteuerung angefordert werden. Diese Anforderung kann automatisch ausgelöst werden, wenn die Züge fahrplanmässig verkehren und somit eine Abfolge von zuvor projektierten Fahrstrassen vorgesehen ist. Bei Abweichungen vom Fahrplan und sonstigen abweichenden Eingriffen werden die Fahrstrassen von dem Fahrdienstleiter manuell angefordert. Jede angeforderte Fahrstrasse wird von einer Stellinstanz (zentral oder dezentral) erst dann eingestellt, wenn die Fahrwegelemente (Weichen, Signale, Blockfreimeldung, Moving Block im ETCS) für diese Fahrstrasse verfügbar sind und entsprechend eingestellt und gegen anderweitige Nutzung durch konkurrierende Fahrstrassen gesperrt werden können. Nach der Befahrung der Fahrstrasse bzw. der in ihr befindlichen Fahrwegelemente wird diese Sperrung wieder aufgehoben und die Fahrwegelemente stehen zur Einstellung neuer Fahrstrassen wieder zur Verfügung.

Derartige Leittechniksysteme werden oft in einer Client-Server Architektur aufgebaut. In einer Leitstelle gibt es Bedienplätze, welche für den Fahrdienstleiter die aktuelle Situation der Bahninfrastruktur inklusive Zugverlauf darstellen und diesem erlauben bei Bedarf mittels graphischer Bedienoberfläche einzugreifen und verschiedene Aktionen auszulösen. Diese Bedienplätze interagieren mit Serversystemen («Ensemble Servers»), welche Bedienplätze an einem oder aus mehreren Standorten mit den zugehörigen Stellwerken in einem Bahninfrastrukturgebiet vernetzen und allfällig diverse automatische Zugleitalgorithmik implementieren.

Eine grosse Herausforderung bei derartigen Leittechniksystemen ist es, die Client und Server-Applikationen nicht nur mit der notwendigen Qualitätsmerkmalen zu entwickeln, sondern auch zu betreiben. Mit anderen Worten bedeutet dies, dass nebst der eigentlichen Bahnleitfunktionalität auch diverse nichtfunktionale Aspekte zu berücksichtigen sind. Diese betreffen einerseits direkte Kundenerwartungen und andererseits implizite Erwartungen an den Ausführungsprozess selbst, welche sich wiederum auf die Produkt-Qualität vor allen Dingen mit Bezug auf die Verfügbarkeit auswirken.

Aus diesem Grunde ist der Verbrauch von Ressourcen (wie z.B. Speicherplatz, Speicherzugriffe, CPU-Nutzung) ganz allgemein bei Steuerungssystemen für den schienengebundenen Verkehr, wie z.B. Stellwerke und dispositive Leitsysteme, bereits während der Entwicklung dieser sicherheitskritischen Anwendungen ein wichtiger Aspekt, der stets zu berücksichtigen ist. Ein übermässiger Ressourcenverbrauch führt zwar nicht unmittelbar zu einem Sicherheitsrisiko, aber die Verfügbarkeit kann unter Umständen leiden, weil es Situationen geben kann, in denen die Anwendung nicht mehr läuft und dann die fehlende Verfügbarkeit zu einem Sicherheitsrisiko werden könnte, weil beispielweise infolge der fehlenden Anwendung manuelle Handlungen notwendig werden. Dies kontrakariert die gewünschte sehr hohe Zuverlässigkeit und erfordert daher Gegenmassnahmen zur Behandlung von typischen Fehlerfällen sowie bei Auftreten von Fehlern deren entsprechende Offenbarung mit ggfs. auch Hinweisen zur Fehlerbehandlung.

Aufgrund dieser Anforderungen wird der Verbrauch von Ressourcen bereits heute gemessen, womit ein ungewollter Anstieg des Ressourcenverbrauchs auch offenbart werden kann, zumal ein derartiger Anstieg durchaus auch auf einen systematischen Fehler des Systems hindeuten könnte. Grundsätzlich ist bei der Auswertung dieser Messungen des Ressourcenverbrauchs zu berücksichtigen, dass diese Verbrauch sehr volatil sein kann und nicht jeder Anstieg zugleich auch zwingend ein echtes Problem bedeutet. Auch ist zu berücksichtigen, dass ein Anstieg des Ressourcenverbrauchs sich auch sehr schleichend entwickeln kann, wodurch ein kurzfristiger unbedenklicher Peak des Ressourcenverbrauchs auch einen relevanten Anstieg verdecken könnte.

Ungeachtetdessen kommt weiter zum Tragen, dass für die Messung des Ressourcenverbrauchs nicht selbst über Gebühr Ressourcen eingesetzt werden sollen, was unter anderem zu der Anforderung führt, so wenig wie möglich zusätzliche Daten speichern zu müssen.

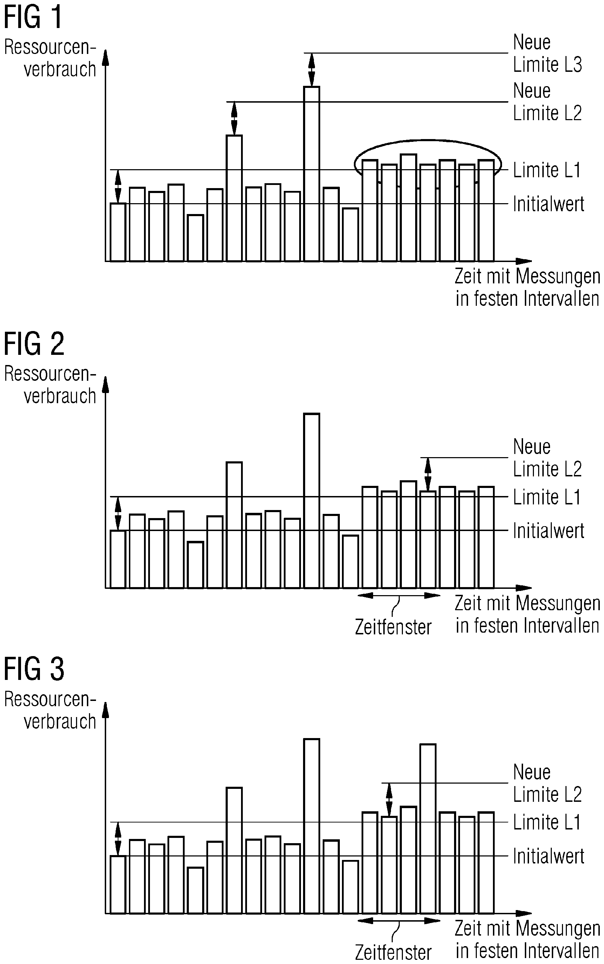

Bisher wurden beispielsweise im Eisenbahnleitsystem ILTIS^{®} der Siemens Mobility AG periodisch in entsprechenden Zeitfenstern Messungen des Ressourcenverbrauchs durchgeführt. Sobald eine Messung über einer erwarteten Limite lag (vgl. Figur 1, siebte Messung liegt über einer Limite L1), wurde dies als ein mögliches Ressourcen-Leak offenbart und in Antwort darauf dann eine neue Limite, z.B. die Limite L2 in Figur 1, bestimmt. Diese Art der Messung ist zwar grundsätzlich ressourcenschonend, aber bei «ungünstigen» Messzeitpunkten kann auch ein relevanter Anstieg des Ressourcenverbrauchs verdeckt werden und damit unentdeckt bleiben (siehe Figur 1, die letzten sieben von einem Ellipsoid eingerahmten Messwert-Maxima).

Der vorliegenden Erfindung liegt daher die Aufgabe zugrunde, ein Verfahren zur Überprüfung eines Ressourcenverbrauchs in einem Steuerungssystem für schienengebundenen Verkehr anzugeben, das eine verbesserte Überprüfung und Bewertung des Ressourcenverbrauchs ermöglicht.

Diese Aufgabe wird erfindungsgemäss durch ein Verfahren zur Überprüfung eines Ressourcenverbrauchs in einem Steuerungssystem für schienengebundenen Verkehr gelöst, umfassend die folgenden Verfahrensschritte:
a) Messen eines aktuellen Wertes für den Ressourcenverbrauch innerhalb eines Zeitfensters;
b) Vergleichen des Ressourcenverbrauchs mit einem ersten definierten Grenzwert;
c1) bei einer im Rahmen des Vergleichs festgestellten Unterschreitung des ersten definierten Grenzwerts bleibt der erste definierte Grenzwert mindestens bis zur nächsten Messung fortbestehen; oder
c2) bei einer im Rahmen des Vergleichs festgestellten Überschreitung des ersten definierten Grenzwerts wird mindestens eine weitere separate Messung innerhalb desselben Zeitfensters vorgenommen;
d) Vergleichen dieses weiteren Messwerts mit dem ersten festgelegten Grenzwert;
d1) bei einer im Rahmen des Vergleichs festgestellten Unterschreitung des ersten definierten Grenzwerts durch den weiteren Messwert bleibt der erste definierte Grenzwert mindestens bis zur nächsten Messung fortbestehen;
d2) bei einer im Rahmen des Vergleichs festgestellten Überschreitung des ersten definierten Grenzwerts durch mindestens einen weiteren Messwert wird für dieses hinsichtlich der Länge fixe, aber rollierende Zeitfenster ein erhöhter Ressourcenverbrauch gemeldet.

Auf diese Weise ist es möglich eine Aussage über den Ressourcenverbrauch treffen zu können, die nicht durch einen zu einem ungünstigen Zeitpunkt in dem Zeitfenster gemessenen erhöhten Ressourcenverbrauch dominiert wird. Erst wenn bei einer festgestellten Überschreitung jeder in demselben Zeitfenster gemessene Ressourcenverbrauch über dem ersten definierten Grenzwert liegt, kommt es zur Meldung eines erhöhten Ressourcenverbrauchs. So können Spitzenlasten, die durchaus sporadisch auftreten können und in der Regel nicht weiter bedenklich sind, für die Feststellung, ob tatsächlich ein erhöhter Ressourcenverbrauch vorliegt, verlässlich ausgeblendet bzw. weniger stark gewichtet werden.

In einer weiteren vorteilhaften Ausgestaltung der vorliegenden Erfindung kann in Antwort auf eine Meldung eines erhöhten Ressourcenverbrauchs ein neuer zweiter Grenzwert definiert werden, der über dem ersten definierten Grenzwert liegt, wobei der Vergleich nach der nächsten periodischen Messung nun mit dem zweiten definierten Messwert anstelle des ersten definierten Messwerts vorgenommen wird. Auf diese Weise kann eine gewisse Flexibilität hinsichtlich der Meldung von erhöhten Ressourcenverbräuchen eingeräumt werden, indem eben die Messungen in weiteren nachfolgenden Zeitfenstern nun in Bezug auf den zweiten Grenzwert ausgewertet werden. Unterschreiten dann aber die nachfolgenden Messungen sogar wieder den ersten definierten Grenzwert, kann dieser wieder für die weitere Beurteilung des Ressourcenverbrauchs herangezogen werden.

Typische für die Bestimmung des effektiven
Ressourcenverbrauchs geeignete Massnahmen können es vorsehen, dass der Ressourcenverbrauch für eine Nutzung von Speicherplatz und/oder CPU-Zeit und/oder CPU-Auslastung gemessen wird.

In einer weiteren vorteilhaften Ausgestaltung der vorliegenden Erfindung kann ein den ersten definierten Grenzwert unterschreitender Messwert während der weiteren Zeitdauer in demselben Zeitfenster bis zur Vornahme der nächsten periodischen Messung im nächsten Zeitfenster als aktueller für dieses Zeitfenster geltender Messwert bestimmt wird.

Weitere vorteilhafte Ausgestaltungen der vorliegenden Erfindung sind den übrigen Unteransprüchen zu entnehmen. Vorteilhafte Ausführungsbeispiele der vorliegenden Erfindung werden anhand der Zeichnung näher erläutert. Dabei zeigen:
- Figur 1: in schematischer Ansicht einen zeitlich in festen Intervallen gemessenen Ressourcenverbrauch eines Leittechniksystems für schienengebundenen Verkehr gemäss dem Stand der Technik;
- Figur 2: in schematischer Ansicht einen zeitlich in festen Intervallen gemessenen Ressourcenverbrauch eines Leittechniksystems für schienengebundenen Verkehr mit optimierter Bewertung des Ressourcenverbrauchs; und
- Figur 3: in schematischer Ansicht einen zeitlich in festen Intervallen gemessenen Ressourcenverbrauch eines Leittechniksystems für schienengebundenen Verkehr mit optimierter Bewertung des Ressourcenverbrauchs.

Figur 1 zeigt in schematischer Ansicht einen zeitlich in festen Intervallen gemessenen Ressourcenverbrauch eines Leittechniksystems für schienengebundenen Verkehr gemäss dem Stand der Technik. Die in Figur 1 dargestellten Blöcke stellen zwanzig Messungen des Ressourcenverbrauchs, hier der Nutzung von Speicherplatz in dem Leittechniksystem, qualitativ dar.

Hierbei findet innerhalb eines durch die Breite des Balkens repräsentiertes Zeitfenster regelmässige wiederkehrende Messungen statt, die jeweils mit dem im vorhergehenden Zeitfenster gemessenen Wert verglichen wird. Hierzu ist zunächst ein erster Grenzwert L1 bestimmt worden, der zunächst die massgebliche Obergrenze für einen unbedenklichen Ressourcenverbrauch darstellt. Gestartet wird daher im ersten Zeitfenster mit einem Initialwert, der hier unter dem Grenzwert L1 liegt. Solange die Messwerte unterhalb des Grenzwerts L1 verbleiben, wie hier für die ersten sechs Zeitfenster dargestellt, bildet der jeweilig letzte Messwert den Wert für den aktuellen Ressourcenverbrauch ab (d.h. es werden aufwandsarm keine älteren Werte gespeichert).

Vorliegend überschreite der im siebten Zeitfenster gemessen Wert nun den ersten Grenzwert L1, weshalb es hier nun zu einer Offenbarung des über den Grenzwert L1 erhöhten Ressourcenverbrauch kommt und beispielsweise eine Warnung von dem Leittechniksystem an einen Fahrdienstleiter/Systemingenieur ausgegeben wird. Es ist ebenso vorgesehen, dass in Antwort auf diese Überschreitung ein neuer gegenüber dem ersten Grenzwert L1 erhöhter zweiter Grenzwert L2 gesetzt wird. Bereits im elften Zeitfenster kommt aber bereits wieder zu einer Überschreitung des bereits erhöhten zweiten Grenzwerts L2, was zum Setzen eines nochmals erhöhten dritten Grenzwerts L3 und natürlich zur Offenbarung dieser Verbrauchsspitze führt. Obwohl die auf die jeweiligen auffälligen Verbrauchsspitzen nachfolgenden Messwerte wieder unter den ersten Grenzwert L1 fallen, besteht durch diese erneute Anhebung jedoch bei diesem Vorgehen eine relativ grosse Gefahr einen relevanten Anstieg des Ressourcenverbrauchs zu übersehen, was hier durch die letzten sieben oberhalb des ersten Grenzwerts L1 liegenden Messwerte (entsprechend eliptisch eingerahmt repräsentiert ist.

Figur 2 zeigt in schematischer Ansicht nun einen zeitlich in festen Intervallen gemessenen Ressourcenverbrauch eines Leittechniksystems für schienengebundenen Verkehr mit einer optimierten Bewertung des Ressourcenverbrauchs. Für die Erläuterung dieser Optimierung wird der aus der Figur 1 bekannte Verlauf der Messung des Ressourcenverbrauchs herangezogen. Der für das siebte Zeitfenster über dem ersten Grenzwert L1 liegende Wert für den Ressourcenverbrauch führt mit dieser Optimierung hier nicht zu einer Anhebung des Grenzwert, weil im Rahmen desselben Zeitfenster mindestens ein weiterer Wert gemessen wird. Fällt nun dieser innerhalb desselben Zeitfensters gemessene weitere Wert wieder unter den ersten Grenzwert L1, dann wird dieser weitere Wert als massgeblicher Messwert herangezogen und als laufender Wert gesetzt (Weiterer Messwert = CURRENT). Somit löst eine kurzfristige Überschreitung des ersten Grenzwerts L1 für den Ressourcenverbrauch keine Offenbarung eines zu hohen Ressourcenverbrauchs aus, da ja der Wert für den Ressourcenverbrauch zum Ende des Zeitfensters hin bereits wieder unter den ersten Grenzwert abgesunken ist.

Wie vorstehend für das siebte Zeitfenster beschrieben, wiederholt sich dieser Vorgang auch für das elfte Zeitfenster. Die hier gemessenen Werte ist noch höher als die im siebten Zeitfenster gemessenen Werte, aber da auch hier mindestens der eine weiterer in demselben Zeitfenster gemessene Wert wieder unterhalb des ersten Grenzwerts L1 liegt, kommt es hier weder zur Auslösung eines Überprüfungs-Events noch zu einer Anhebung der Limite.

Erst bei der viertletzten Messung in der Figur 2 liegen alle innerhalb dieses Zeitfensters gemessenen Werte immer noch über dem ersten Grenzwert L1, weshalb nun ein erhöhter Ressourcenverbrauch signalisiert und die Grenze auf den zweiten Grenzwert L2 angehoben wird. Gegenüber der Darstellung in Figur 1 ist nun neu, dass während eines Zeitfensters geprüft wird, ob die Limite auch wieder unterschritten wird, und zwar ohne zusätzliche Messwerte zu speichern und dadurch wiederum mehr Ressourcen zu verbrauchen.

Der zugehörige Algorithmus ist dabei nachfolgend dargestellt. Bei jeder Messung innerhalb eines Zeitfensters werden folgende Schritte durchlaufen: Liegt der Messwert über der Limite?

| | |
|---|---|
| Nein: | Die aktuelle Messung wird zu "Current" Gehe zur nächsten Messung |
| Ja: | Ist "Current" noch innerhalb desselben Zeitfensters, d.h. die Zeit, die seit "Current" vergangen ist, ist kleiner als das Zeitfenster lang ist? |
| Ja: | Gehe zur nächsten Messung |
| Nein: | Limite neu berechnen; die aktuelle Messung wird zu "Current"; Ressourcenverbrauch offenbaren; Gehe zur nächsten Messung. |

Wenn nun die Speicherung eines zusätzlichen Messwerts möglich ist, dann könnte im obigen Algorithmus der tiefste Wert aus dem Zeitfenster mitgeführt werden. Dieser Werte wäre dann die Basis für die Berechnung der neuen Limite und würde an dieser Stelle zu "Current". Dadurch wird verhindert, dass ein Peak am Ende des Zeitfensters die Limite unnötig in die Höhe treibt, was in Figur 3 für die viertletzte Messung dargestellt ist. Die zuvor auf den zweiten Grenzwert L2 angehobene Limite wird hier nicht weiter angehoben, obwohl zwischenzeitlich in diesem Zeitfenster ein weiter über dem zweiten Grenzwert L2 liegender Ressourcenverbrauch gemessen wurde.

Mit dem vorstehend beschriebenen Verfahren lassen sich so eine Reihe von Vorteilen erzielen:
i) Die Lösung ist vergleichsweise einfach und sehr Ressourcenschonend, d.h. gegenüber der bisherigen Lösung;
ii) es ist kein zusätzlicher Speicher nötig;
iii) es wird kaum zusätzliche Rechenzeit benötigt;
iv) kurzfristig auftretende Ressourcen-Peaks werden weggefiltert; und
v) Ein effektiver Anstieg wird aber erkannt, d.h. nicht mehr durch Ressourcen-Peaks verdeckt.

Auf diese Weise kann pro zu überwachende Einheit festgelegt, welche Limite gelten soll. Zudem ist die Berechnung einer Erhöhung der Limite flexibel anpassbar. Ebenso kann auch eine Absenkung einer zuvor erhöhten Limite wieder vorgenommen werden, wenn der Ressourcenverbrauch nach einer relevanten Überschreitung und dessen Offenbarung wieder länger (z.B. bereits nach einigen wenigen Zeitfenstern) unter den zunächst gesetzten ersten Grenzwert L1 abgesunken ist. Des weiteren kann flexibel bestimmt werden, wie groß das zu berücksichtigende Zeitfenster sein soll, wobei ein längeres Zeitfenster, das viele Messungen umfasst, nicht zu einem größeren Ressourcenverbrauch führt, weil immer nur ein Wert als Current und ggfs. der niedrigste innerhalb eines Zeitfensters gemessene Wert mitgeführt werden.

## Patentansprüche

1. Verfahren zur Überprüfung eines Resourcenverbrauchs in einem Steuerungssystem für schienengebundenen Verkehr, umfassend die folgenden Verfahrensschritte:
a) Messen eines aktuellen Wertes für den Ressourcenverbrauch innerhalb eines Zeitfensters;
b) Vergleichen des Ressourcenverbrauchs mit einem ersten definierten Grenzwert;
c1) bei einer im Rahmen des Vergleichs festgestellten Unterschreitung des ersten definierten Grenzwerts bleibt der erste definierte Grenzwert mindestens bis zur nächsten Messung fortbestehen; oder
c2) bei einer im Rahmen des Vergleichs festgestellten Überschreitung des ersten definierten Grenzwerts wird mindestens eine weitere separate Messung innerhalb desselben Zeitfensters vorgenommen;
d) Vergleichen dieses weiteren Messwerts mit dem ersten festgelegten Grenzwert;
d1) bei einer im Rahmen des Vergleichs festgestellten Unterschreitung des ersten definierten Grenzwerts durch den weiteren Messwert bleibt der erste definierte Grenzwert mindestens bis zur nächsten Messung fortbestehen;
d2) bei einer im Rahmen des Vergleichs festgestellten Überschreitung des ersten definierten Grenzwerts durch mindestens einen weiteren Messwert wird für dieses hinsichtlich der Länge fixe, aber rollierende Zeitfenster ein erhöhter Ressourcenverbrauch gemeldet.

2. Verfahren nach Anspruch 1, **dadurch gekennzeichnet, dass** in Antwort auf eine Meldung eines erhöhten Ressourcenverbrauchs ein neuer zweiter Grenzwert definiert wird, der über dem ersten definierten Grenzwert liegt, wobei der Vergleich nach der nächsten periodischen Messung nun mit dem zweiten definierten Messwert anstelle des ersten definierten Messwerts vorgenommen wird.

3. Verfahren nach Anspruch 1 oder 2, **dadurch gekennzeichnet, dass** der Ressourcenverbrauch für eine Nutzung von Speicherplatz und/oder CPU-Zeit und/oder CPU-Auslastung gemessen wird.

4. Verfahren nach einem der vorangehenden Ansprüche, wobei ein den ersten definierten Grenzwert unterschreitender Messwert während der weiteren Zeitdauer in demselben Zeitfenster bis zur Vornahme der nächsten periodischen Messung als aktueller für dieses Zeitfenster geltender Messwert bestimmt wird.
